# EUROPÄISCHE PATENTSCHRIFT

(11) **EP 3 069 179 B1**
(45) Veröffentlichungstag und Bekanntmachung des Hinweises auf die Patenterteilung: **04.09.2019**
(21) Anmeldenummer: 14824785.1
(22) Anmeldetag: 07.11.2014
(51) Int. Cl.: G02B 6/36

(54) **OPTISCHE SCHLEIFRINGANORDNUNG**
OPTICAL SLIP RING ARRANGEMENT
SYSTÈME DE BAGUE COLLECTRICE OPTIQUE

(30) Priorität: 13.11.2013 DE 102013223153
(43) Veröffentlichungstag der Anmeldung: 21.09.2016
(73) Patentinhaber: LEONI Kabel GmbH, 90402 Nürnberg (DE)
(72) Erfinder: BOCK, Marco, 98724 Lauscha (DE); HEINZ, Edgar, 96465 Neustadt (DE); KUFNER, Stefan, 96242 Sonnefeld (DE)
(74) Vertreter: FDST Patentanwälte
(86) Internationale Anmeldenummer: PCT/EP2014/074082
(87) Internationale Veröffentlichungsnummer: WO 2015/071197

(56) Entgegenhaltungen:
- GB-A- 2 247 089
- US-A- 4 786 131
- US-B1- 7 433 556

## Beschreibung

Die Erfindung betrifft eine optische Schleifringanordnung mit dem Merkmal des Oberbegriffs des Anspruchs 1.

Eine derartige optische Schleifringanordnung ist aus der US 4,953,932 A zu entnehmen. Derartige optische Schleifringanordnungen dienen zur berührungslosen Übertragung von optischen Signalen zwischen zwei rotierbar zueinander angeordneten optischen Bauelementen. Insbesondere wird über eine derartige optische Schleifringanordnung ein Datensignal übertragen. Der Begriff "Schleifring" ist an herkömmliche mechanische Schleifringe angelehnt und im Hinblick auf optische Schleifringanordnungen insoweit irreführend, als dass bei diesen die beiden relativ zueinander rotierenden optischen Bauelemente nicht aneinander mechanisch schleifen.

Bei der aus der US 4,953,932 A zu entnehmenden Schleifringanordnung sind jeweils eine Vielzahl von optischen Fasern an einer Art Lochscheibe mit ihren Faserenden gehalten, wobei die Faserenden jeweils unmittelbar aneinander angrenzen und auf einer Kreislinie liegen. Das Zentrum des Kreises bildet eine Rotationsachse der Bauelemente. Die einzelnen Fasern sind jeweils an einem optischen Stab mit vergleichsweise großem Durchmesser angeschlossen, wobei dieser optische Stab einen Mischer bildet. Ausgangsseitig sind an diesem optischen Stab wieder eine Vielzahl von optischen Fasern angeschlossen, die dann zu einem Lichtsensor führen.

Der herstellungstechnische Aufwand hierfür ist vergleichsweise groß. Aufgrund des Aufbaus mit den verschiedenen Faserbündeln eignet sich diese optische Schleifringanordnung nur bedingt für die Übertragung von hochfrequenten Datensignalen beispielsweise im Bereich von 10 GHz und mehr. Derartige Datensignale haben eine relativ kurze Wellenlänge und Unterschiede in den optischen Weglängen in den unterschiedlichen Fasern führen zu Gangunterschieden in den Signalteilen, was zu Fehlern bei der Datenauswertung führen kann.

Aus der DE 200 15 959 U1 ist eine weitere optische Schleifringanordnung zu entnehmen, welche eine mehrkanalige Übertragung erlaubt. Hierzu ist ein zentrales Lichtwellenleiterbündel sowie ergänzend hierzu ein koaxial angeordneter Ring aus zweiten Lichtleitern angeordnet. Die Lichtleiter sind dabei durch einzelne Fasern gebildet, welche innerhalb eines Kupplungsteils gehalten sind und rückseitig jeweils aus den Kupplungsteilen austreten.

Ausgehend hiervon liegt der Erfindung die Aufgabe zugrunde, eine optische Schleifringanordnung anzugeben, welche einen konstruktiv einfachen Aufbau zeigt und insbesondere auch für die zuverlässige Übertragung von hochfrequenten Datensignalen geeignet ist.

Die Aufgabe wird gemäß der Erfindung gelöst durch eine optische Schleifringanordnung mit den Merkmalen des Anspruchs 1. Diese dient zur kontaktlosen Datenübertragung von insbesondere hochfrequenten Datensignalen im GHz-Bereich und vorzugsweise für die Übertragung von Datensignalen größer 10 GHz. Im Betrieb werden daher über die durch diese optische Schleifringanordnung gebildete Koppelstelle derartige hochfrequente Datensignale übertragen.

Die optische Schleifringanordnung weist ein erstes optisches Bauelement sowie ein zweites optisches Bauelement auf, die zueinander um eine gemeinsame Rotationsachse rotierbar angeordnet sind. Das erste Bauelement weist eine erste Stirnfläche und das zweite Bauelement eine zweite Stirnfläche auf, welche einander gegenüberliegend angeordnet sind. Die beiden Stirnflächen sind dabei beispielsweise voneinander im Millimeter-Bereich beanstandet, insbesondere im Bereich zwischen 400 µm und 2000 µm.

Das erste Bauelement weist eine Mehrzahl an optischen Fasern auf, die in einem Träger geführt sind und die mit ihren Faserenden an einer ersten durch den Träger gebildeten Stirnfläche entlang einer Kreislinie oder Kreisbogenlinie mit Radius R angeordnet sind. Das Zentrum der Kreislinie ist durch die Rotationsachse gebildet. Es können sowohl mehrere Kreisbogensegmente als auch ein durchgehender Kreis durch die Faserenden gebildet sein.

An der der Stirnfläche gegenüberliegenden Seite weist der Träger eine Koppelfläche auf, an der ein planarer Lichtwellenleiterchip angekoppelt ist. Bei dieser Schleifringanordnung sind daher die Fasern in einem Träger nicht nur an der Stirnfläche sondern auch an der Koppelfläche definiert gehalten und eingebettet, wobei der Träger zugleich an dieser Koppelfläche an einen Lichtwellenleiterchip angekoppelt ist.

Unter planarer Lichtwellenleiterchip (PLC = planarer Lichtwellenleiterchip) werden optische Bauelemente verstanden, bei denen in die Oberfläche eines Trägermaterials ein Lichtwellenleitermuster eingebracht ist. Dies erfolgt durch eine spezielle Behandlung des Trägermaterials, welches beispielsweise Glas oder auch ein geeigneter transparenter Kunststoff ist. Durch die Strukturierung des Trägermaterials werden definierte optische Lichtleiterbahnen erzeugt. Insbesondere wird das Leiterbahnmuster dabei durch einen lonendiffusionsprozess erzeugt. Die gewünschte Strukturierung des Leiterbahnmusters, also die Vorgabe des Verlaufs der einzelnen Leiterbahnen, erfolgt dabei beispielsweise durch eine Maskierung auf lithographischem Weg. Neben dem Einbringen von Ionen mit dem lonendiffusionsprozess sind auch andere Verfahren zur Strukturierung des Trägermaterials bekannt, beispielsweise durch Laserbehandlung.

Derartige planare Lichtwellenleiterbauteile sind insbesondere als Verzweiger ausgebildet, bei dem mehrere Ein- oder Ausgänge auf einen gemeinsamen Aus- bzw. Eingang geführt werden. Dies erfolgt üblicherweise durch ein mehrfach verzweigtes Leiterbahnmuster. Durch die Verwendung eines derartigen Lichtwellenleiterchips wird der besondere Vorteil erzielt, dass in einem einzigen kompakten Bauteil die Vielzahl der einzelnen optischen Fasern auf einen gemeinsamen Ein- bzw. Ausgang zusammen geführt werden, so dass zum Einen insgesamt die Handhabung und der Aufbau bei der Herstellung der Schleifringanordnung vergleichsweise einfach ist. Durch die Bereitstellung des Trägers, in dem die einzelnen Fasern an der Koppelseite an definierter Position gehalten sind, brauchen daher lediglich der Träger und der Lichtwellenleiterchip aneinander gekoppelt zu werden.

Ergänzend ist durch diese Ausgestaltung auch eine zuverlässige hochfrequente Datenübertragung gewährleistet. Temperaturschwankungen in der Umgebung, die beispielsweise bei der Verwendung von Faserbündeln oder auch von komplexen optischen Aufbauten, wie beispielsweise bei der Verwendung von zusätzlichen Linsensystemen etc., zu Gangunterschieden führen können und damit zu Fehlern bei der Datenauswertung, sind durch die Verwendung des Lichtwellenleiterchips zumindest deutlich reduziert. So wirken sich Temperaturschwankungen auf das gesamte Trägermaterial des Lichtwellenleiterchips gleichermaßen aus, so dass sämtliche Wellenleiterbahnen auf dem Lichtwellenleiterchip die gleiche relative Veränderung erfahren. Auch ist durch die planare Lichtwellenleitertechnologie eine hochgenaue Technik bereitgestellt, mit der bereits bei der Herstellung die einzelnen Lichtwellenleiterbahnen im Hinblick auf eine möglichst identische Länge exakt hergestellt werden können.

Die Ankopplung des Lichtwellenleiterchips an der Koppelfläche des Trägers verlangt aufgrund der planaren Technologie, dass zumindest ein Teil und vorzugsweise alle der Fasern, die auf der Kreisbogenlinie an der ersten Stirnfläche angeordnet sind, in zumindest einer gemeinsamen Anschlussebene an der Koppelfläche liegen. Vorzugsweise werden sämtliche Fasern, die auf dieser Kreisbogenlinie liegen in eine gemeinsame Anschlussebene geführt, so dass sie entlang einer einzigen Linie verlaufen. Diese Linie bzw. Anschlussebene fluchtet dann mit der Oberfläche des Lichtwellenleiterchips, in die das Leiterbahnmuster eingebracht ist.

Grundsätzlich können die Faserenden an der Koppelfläche auch in mehrere, insbesondere in zwei Anschlussebenen und damit in mehrere Linien überführt werden. In diesem Fall werden dann vorzugsweise mehrere planare Lichtwellenleiterchips angeordnet, wobei jeweils eine Linie mit einer Oberfläche eines Lichtwellenleiterchips fluchtet. Grundsätzlich besteht also die Möglichkeit, am Träger zumindest einen weiteren Lichtwellenleiterchip anzuschließen und die Mehrzahl der Fasern auf die Lichtwellenleiterchips aufzuteilen.

In zweckdienlicher Weiterbildung ist der Lichtwellenleiterchip als ein sogenannter Combiner ausgebildet, welcher einen ersten gemeinsamen Ausgang und eine Vielzahl an Eingängen aufweist, wobei die Eingänge über das integrierte Lichtwellenleitermuster auf den ersten gemeinsamen Ausgang zusammengeführt sind. In einer bevorzugten Ausführungsvariante, bei der an dem Träger lediglich ein einziger Lichtwellenleiterchip angeordnet ist, sind dabei alle Fasern auf diesen ersten gemeinsamen Ausgang zusammengeführt. An diesem Ausgang ist eine abgehende optische Verbindungsfaser angekoppelt, über die das Datensignal zu einem Empfänger geführt wird. Grundsätzlich ist auch die umgekehrte Signalrichtung möglich, so dass in diesem Fall das Signal von einem gemeinsamen Eingang auf die Vielzahl der Ausgänge geführt werden würde, und von diesen Ausgängen des Lichtwellenleiterchips in die einzelnen Fasern des Trägers eingekoppelt wird.

In bevorzugter Ausgestaltung ist die optische Schleifringanordnung für eine bidirektionale Anordnung ausgebildet. Die Mehrzahl der auf der Kreisbogenlinie angeordneten Fasern definiert allgemein einen ersten Übertragungskanal und ergänzend ist noch eine Zentralfaser und/ oder eine Gruppe von weiteren optischen Fasern im Träger geführt, die an der ersten Stirnseite enden. Im Falle der Zentralfaser endet diese auf der Rotationsachse liegend. Im Falle einer Gruppe von weiteren optischen Fasern enden deren Faserenden an der ersten Stirnseite auf einer weiteren Kreislinie oder zumindest auf einem Kreisbogen mit einem zweiten Radius. Der zweite Radius der Kreis(bogen)linie ist dabei verschieden von dem ersten Radius der optischen Fasern des ersten Übertragungskanals. Über die Zentralfaser oder die weiteren optischen Fasern ist also ein zweiter Übertragungskanal definiert. Grundsätzlich können auch mehr als zwei Übertragungskanäle ausgebildet sein (Zentralfaser, optische Fasern sowie weitere Gruppe(n) von weiteren optischen Fasern).

Zweckdienlicherweise ist auch die Zentralfaser bzw. sind die weiteren optischen Fasern des weiteren Übertragungskanals an die gegenüberliegende Koppelfläche geführt und an den zumindest einen Lichtwellenleiterchip angekoppelt. Die Zentralfaser liegt insbesondere in der gleichen Anschlussebene wie die optischen Fasern des ersten Übertragungskanals.

Bei mehreren Übertragungskanälen, insbesondere bei einer Anordnung mit Faserenden, die auf der ersten Stirnseite entlang von zwei Kreislinien mit unterschiedlichen Radien angeordnet sind, werden die einzelnen Fasern der verschiedenen Übertragungskanäle vorzugsweise jeweils in eine gemeinsame kanalspezifische Anschlussebene und damit gemeinsame Linie auf der Koppelfläche überführt. Jeder Linie und damit jedem Übertragungskanal ist dann jeweils ein eigener Lichtwellenleiterchip zugewiesen.

Zweckdienlicherweise ist der Combiner entsprechend mit einem Durchschleifpfad ausgebildet, welcher der Zentralfaser zugeordnet ist. Der Durchschleifpfad erstreckt sich dabei zweckdienlicherweise ohne Verzweigung von einem Eingang zu einem Ausgang. Alternativ zu der Ankopplung der Zentralfaser an den Lichtwellenleiterchip besteht auch die Möglichkeit, die Zentralfaser selbst nach Art eines Bypasspfades an den Combiner vorbeizuführen.

Gemäß einer bevorzugten ersten Ausgestaltung grenzen die Faserenden der optischen Fasern eines jeweiligen Übertragungskanals an der ersten Stirnfläche unmittelbar aneinander an und bilden einen Kreis. Unter unmittelbar aneinander angrenzend wird dabei verstanden, dass diese zueinander maximal einen Abstand entsprechend ihrem Faserdurchmesser, vorzugsweise ihrem halben Faserdurchmesser aufweisen. Der Faserdurchmesser liegt typischerweise im Bereich zwischen 50 µm und 200 µm.

Durch die aneinander angrenzende Anordnung der Faserenden wird gewährleistet, dass ein von der zweiten Stirnfläche des zweiten optischen Bauelements ausgehender Lichtkegel zu einem ausreichenden Teil in Überdeckung mit einem der Faserenden ist.

Alternativ zu der Anordnung entlang eines vollständigen Kreises sind die Faserenden in bevorzugter Ausgestaltung etwa halbkreisförmig aneinander angrenzend angeordnet. Unter halbkreisförmig wird hierbei verstanden, dass die Faserenden unmittelbar aneinander angrenzend entlang eines Halbkreisbogens verlaufen und sich über einen Winkelbereich von 180° +/- 60° erstrecken. Vorzugsweise erstrecken sie sich dabei über mehr als 180°, beispielsweise über einen Bereich von 190° bis 240°.

Alternativ besteht auch die Möglichkeit, mehrere einzelne durch einzelne Faserenden gebildete Kreisbogensegmente auszubilden, die voneinander beabstandet sind und innerhalb derer die einzelnen Faserenden jeweils unmittelbar aneinander angrenzend positioniert sind. Die spezielle Ausgestaltung richtet sich dabei nach der Ausbildung der zweiten optischen Komponente. Bei einem durch die Faserenden gebildeten Vollkreis der ersten Stirnfläche ist ein einzelner Lichtwellenleiter an der zweiten Stirnfläche des zweiten Bauteils für eine zuverlässige Datenübertragung ausreichend. Sind beispielsweise etwa zwei gegenüberliegende, auf einer Kreislinie liegende Lichtwellenleiter an der zweiten Stirnfläche angeordnet, so reicht die halbkreisförmige Anordnung an der ersten Stirnfläche aus.

Durch die Reduzierung der Anzahl der Fasern im ersten Bauelement wird insgesamt der Herstellungsaufwand reduziert. Auch wird dadurch die Fehleranfälligkeit aufgrund von herstellungstechnisch bedingten Längenunterschieden der einzelnen Lichtwellenleiter reduziert. Vorzugsweise bilden daher die Faserenden an der ersten Stirnfläche lediglich ein Kreisbogensegment oder auch mehrere voneinander getrennte Kreisbogensegmente und sind nicht durchgehend entlang einer Kreislinie angeordnet.

Die einzelnen in einem jeweiligen planaren Lichtwellenleiterchip eingebrachten Leiterbahnen des jeweiligen Leitermusters sind in bevorzugter Ausgestaltung als sogenannte Gradientenindex-Wellenleiter ausgebildet. Gradientenindex-Wellenleiter zeichnen sich dadurch aus, dass der Brechungsindex in radialer Richtung nicht stufenförmig sondern kontinuierlich verläuft. Derartige Gradientenindex-Wellenleiter vermeiden oder verringern zumindest Laufzeitunterschiede von Signalen in den einzelnen integrierten Wellenleitern des Lichtwellenleiterchips. Insbesondere wird durch derartige Gradientenindex-Wellenleiter eine Dispersion von verschiedenen Moden bei einer multimodalen Übertragung zumindest verringert. Diese Ausgestaltung ist insbesondere bei hochfrequenten Datenübertragungen mit hohen Datenraten von besonderer Bedeutung, um seine sichere und zuverlässige Übertragung zu gewährleisen.

In bevorzugter Ausgestaltung weisen das erste optische Bauelement sowie das zweite optische Bauelement einen identischen Aufbau auf. Hierdurch wird ein symmetrischer Aufbau beidseitig des optischen, berührungslosen Übertragungsweges erreicht. Dadurch wird die Bevorratung sowie der Aufbau und insgesamt die Herstellung kostengünstig gehalten.

Insbesondere weist auch das zweite optische Bauelement einen Träger mit darin einliegenden Fasern auf, welcher an zumindest einem planaren Lichtwellenleiterchip angeschlossen ist. Der Träger weist dabei eine zweite Stirnseite auf, welche vorzugsweise ein zur ersten Stirnseite identisches Faserenden-Muster aufweist. Alternativ hierzu unterscheiden sich die Faserenden-Muster beispielsweise im Hinblick auf die Anzahl der Fasern. Wesentlich ist, dass die Fasern der einzelnen Übertragungskanäle an beiden Stirnseiten jeweils auf einem gleichen Radius bezüglich der Drehachse liegen.

Um den Herstellungsaufwand gering zu halten, sind in bevorzugter Ausgestaltung bei dem zweiten optischen Bauelement nur ein oder einige wenige Lichtwellenleiter ausgebildet, welche an der zweiten Stirnfläche insbesondere vereinzelt und voneinander beabstandet sowie auf einer Kreislinie liegend enden. Unter einige wenige Lichtleiter werden bevorzugt zwei Lichtwellenleiter und höchstens beispielsweise fünf bis zehn Lichtwellenleiter verstanden. Die Anzahl der an der zweiten Stirnfläche endenden Lichtwellenleiter hängt dabei insbesondere auch von der speziellen Ausgestaltung des zweiten optischen Bauelements ab. Die Anzahl ist dabei bevorzugt kleiner als an der ersten Stirnfläche des ersten optischen Bauelements. Unter anderem in diesem Fall sind die beiden optischen Bauelemente verschieden ausgebildet.

Im Hinblick auf eine zwei- oder mehrkanalige Übertragungsstrecke weist auch das zweite optische Bauelement einen zentralen Lichtwellenleiter auf, nachfolgend als Zentralleiter bezeichnet, welcher an der zweiten Stirnfläche auf der Rotationsachse liegend endet. Der Zentralleiter fluchtet daher grundsätzlich mit der Zentralfaser des ersten optischen Bauelements. Alternativ oder ergänzend weist auch das zweite optische Bauelement zumindest eine weitere optische Faser oder eine Gruppe von optischen Fasern für einen weiteren Übertragungskanal auf, die unter dem zweiten Radius von dem Zentralleiter beabstandet ist bzw. sind.

Gemäß einer ersten Ausführungsvariante ist das zweite optische Element als ein zweiter Träger mit zumindest einer darin geführten Faser als Lichtwellenleiter ausgebildet. Diese zumindest eine Faser liegt dabei beabstandet von der Rotationsachse auf einem Radius, welcher dem Radius des Kreises beziehungsweise der Kreisbogenlinie entspricht, auf der die Faserenden der optischen Fasern des ersten Übertragungskanals an der ersten Stirnfläche angeordnet sind. Grundsätzlich besteht die Möglichkeit, auch mehrere optische Fasern vorzugsweise verteilt entlang eines Kreises mit diesem Radius zu verteilen. Zweckdienlicherweise wird jedoch nur eine Faser als Lichtwellenleiter in den Träger beabstandet von der Rotationsachse integriert. Bei der Verwendung einer mehrkanaligen Ausgestaltung ist in den Träger zweckdienlicherweise noch zumindest eine zusätzliche, beispielsweise den Zentralleiter bildende Faser geführt.

In einer bevorzugten alternativen Ausgestaltung umfasst das zweite optische Element zumindest einen zweiten planaren Lichtwellenleiterchip, der den zumindest einen Lichtwellenleiter aufweist. Auch dieser endet an der zweiten Stirnfläche um den Radius beabstandet von der Rotationsachse.

Zweckdienlicherweise enden an der zweiten Stirnseite genau zwei Lichtwellenleiter, die etwa um 180° drehversetzt und damit um etwa den doppelten Radius voneinander beabstandet sind. Die beiden Lichtwellenleiter sind dabei insbesondere in den Lichtwellenleiterchip integriert. Es werden daher zwei Ausgänge bereitgestellt, welche mit den Fasern an der ersten Stirnfläche fluchten, so dass eine sichere Datenübertragung erreicht ist. Dies ermöglicht auf Seiten der ersten Stirnfläche, dass die Fasern lediglich in einem Halbkreis angeordnet sind.

Zweckdienlicherweise ist hierzu der zweite Lichtwellenleiterchip als ein 1X2-Splitter ausgebildet ist. Ähnlich wie ein Combiner weist dieser einen gemeinsamen Eingang auf, der sich auf mehrere, nämlich zwei an der zweiten Stirnseite endende Lichtwellenleiter aufteilt, wobei die Enden der Lichtwellenleiter auf einer gedachten Kreislinie mit Radius R um die Rotationsachse liegen. An den zweiten Lichtwellenleiterchip wird an dem gemeinsamen Eingang zweckdienlicherweise eine optische Verbindungsfaser angeschlossen, die dann zu einem Sender / Empfänger geführt wird. Bevorzugt ist das zweite optische Bauelement mit einem Sender verbunden. Auch hier gilt wiederum, dass die umgekehrte Übertragungsrichtung ebenso möglich ist. In diesem Fall würde der Splitter einen Combiner bilden.

In besonders bevorzugter Ausgestaltung ist ein dritter planarer Lichtwellenleiterchip angeordnet. Die beiden Lichtwellenleiterchips sind mit ihren Oberflächen, in die das Leiterbahnmuster integriert ist, einander zugewandt und bilden das zweite optische Bauelement. Die beiden Lichtwellenleiterchips sind dabei allenfalls geringfügig, beispielsweise um 0,5 - 1 mm voneinander beabstandet. Bevorzugt liegen sie mit ihren planen Oberflächen aneinander an. Diese Ausgestaltung beruht auf der Überlegung, bei der mehrkanaligen Ausgestaltung mit dem Zentralleiter für diesen einen eigenen Lichtwellenleiterchip vorzusehen. Aufgrund der planaren Technologie, bei der also alle Leiterbahnen in einer gemeinsamen Ebene liegen, wäre es nicht möglich, die beiden außen liegenden Wellenleiter mit einem gemeinsamen Eingang zu verbinden und gleichzeitig auch den Zentralleiter an eine gemeinsame Anschlussseite zu führen. Dies würde ein Kreuzen von Leiterbahnen erfordern.

Durch die Ausbildung mit den zwei Lichtwellenleiterchips, die an einer Verbindungsebene aneinander zumindest nahezu anliegen und definiert zueinander gehalten werden, beispielsweise miteinander verklebt sind oder auch mechanisch miteinander verbunden sind, wird daher ein besonders effizienter Aufbau erzielt. Ausführungsbeispiele der Erfindung werden nachfolgend anhand der Figuren näher erläutert. Diese zeigen jeweils in teilweise stark vereinfachten Darstellungen:
- Fig. 1: eine perspektivische Darstellung der beiden optischen Bauelemente zur Ausbildung einer optischen Schleifringanordnung,
- Fig. 2: eine Aufsicht auf eine erste Stirnfläche des ersten Bauelements, wobei ergänzend eine zweite Stirnfläche des zweiten Bauelements dargestellt ist,
- Fig. 3: eine stark vereinfachte Seitenansicht einer optischen Schleifringanordnung gemäß einer ersten Ausführungsvariante,
- Fig. 4: eine stark vereinfachte Seitenansicht einer optischen Schleifringanordnung gemäß einer zweiten Ausführungsvariante,
- Fig. 5A: eine Ansicht auf eine Koppelfläche eines Trägers des ersten optischen Bauelements mit einer Vielzahl von in einer Anschlussebene liegenden Fasern,
- Fig. 5B: eine Ansicht auf die erste Stirnfläche des Trägers des ersten optischen Bauelements,
- Fig. 6: eine Aufsicht auf einen ersten Lichtwellenleiterchip des ersten optischen Bauelements mit einem integrierten Lichtwellenleitermuster,
- Fig. 7: eine Ansicht der zweiten Stirnfläche des zweiten optischen Bauelements der ersten Ausführungsvariante gemäß Fig. 3, bei der das zweite optische Bauelement durch einen zweiten und dritten Lichtwellenleiterchip gebildet ist,
- Fig. 8: eine Aufsicht auf eine mit einem Lichtwellenleitermuster versehene Oberfläche des zweiten Lichtwellenleiterchips sowie
- Fig. 9: eine Aufsicht auf die mit einem Lichtwellenleitermuster versehene Oberfläche des dritten Lichtwellenleiterchips.

In den Figuren sind gleichwirkende Teile mit den gleichen Bezugszeichen versehen.

Die optische Schleifringanordnung 2 umfasst ein erstes optisches Bauelement 4 sowie ein zweites optisches Bauelement 6, die relativ zueinander um eine Rotationsachse D rotierbar angeordnet sind. Die optische Schleifringanordnung 2 weist hierzu ein nicht näher dargestelltes mechanisches Gehäuse auf, in dem die beiden Bauelemente 4, 6 angeordnet sind. Die beiden Bauelemente 4, 6 sind dabei in zwei zueinander rotierbar gehaltenen Gehäuseteilen integriert. Eines der beiden Bauelemente 4, 6 ist dabei vorzugsweise feststehend angeordnet, während das andere rotierbar ist.

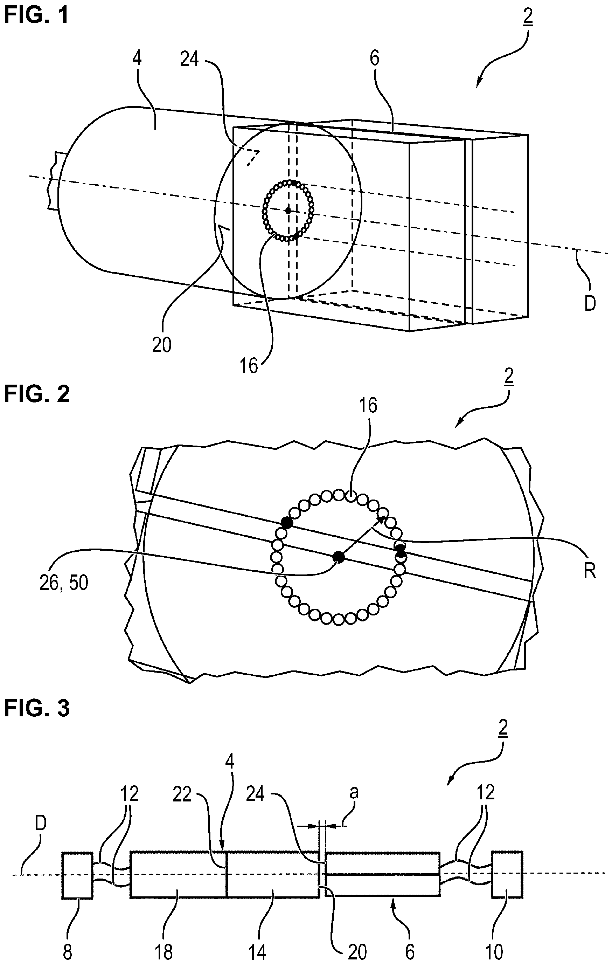

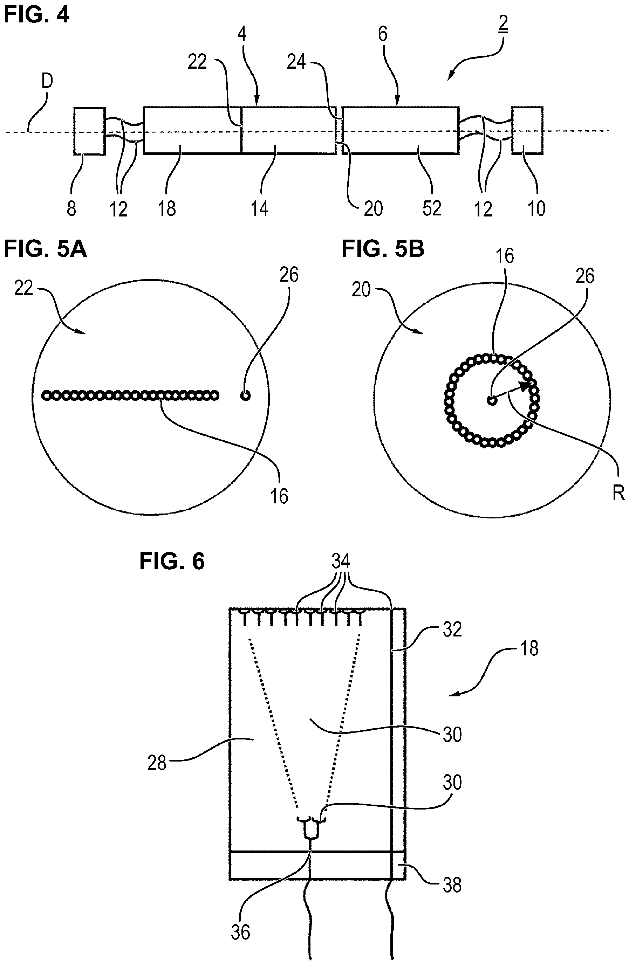

Die beiden optischen Bauelemente 4, 6 sind jeweils - wie insbesondere aus den Fig. 3 und 4 hervorgeht - mit einer ersten Sende/Auswerteeinheit sowie einer zweiten Sende/Auswerteeinheit verbunden. Vorzugsweise ist - ohne Beschränkung der Allgemeinheit - erstere als Auswerteeinheit 8 und letzere als Sendeeinheit 10 ausgebildet. Die optischen Bauelemente 4, 6 stehen mit diesen Sende/Auswerteeinheiten 8, 10 vorzugsweise jeweils über optische Verbindungsfasern 12 in Verbindung. Die beiden optischen Bauelemente 4, 6 sind voneinander um einen Abstand a beabstandet, welcher insbesondere im Bereich von etwa 700 µm liegt.

Die beiden optischen Bauelemente 4, 6 dienen zur kontaktlosen optischen Datenübertragung von hochfrequenten Datensignalen im Gigahertzbereich mit Signalfrequenzen vorzugsweise > 1 GHz.

Derartige optische Schleifringanordnungen 2 werden allgemein in Anwendungsbereichen eingesetzt, bei denen die Schleifringanordnung robusten Umgebungsbedingungen und Umwelteinflüssen ausgesetzt ist. Generell wird hierzu ein zu übertragendes Datensignal von der Sendeeinheit 10 an das zweite optische Bauelement 6 übertragen und von diesem über den Abstand a hinweg in das erste optische Bauelement 4 bei einer Rotationsbewegung der beiden Bauelemente 4, 6 zueinander eingekoppelt. Von dem ersten Bauelement 4 wird das Datensignal dann zur Auswerteeinheit 8 weitergeleitet.

Das erste Bauelement 4 besteht aus einem ersten Träger 14 mit darin geführten optischen Fasern 16 sowie aus einem ersten planaren Lichtwellenleiterchip 18, welcher im Ausführungsbeispiel als Combiner 18 ausgeführt ist. Der erste Träger 14 sowie der Combiner 18 bilden eine gemeinsame Baueinheit und sind vorzugsweise direkt aneinander befestigt.

Der erste Träger 14 weist ein Trägermaterial mit darin eingebrachten Kanälen oder Bohrungen auf, in die die optische Fasern 16 eingebracht sind. Der Träger 14 besteht allgemein vorzugsweise aus Vollmaterial, weist daher abgesehen von den Kanälen für die optischen Fasern 16 keine Hohlräume auf. Er erstreckt sich von einer vorderen, ersten Stirnfläche 20 bis zu einer rückseitigen hinteren Koppelfläche 22. Die erste Stirnfläche 20 ist im eingebauten Zustand gegenüberliegend zu einer zweiten Stirnfläche 24 des zweiten Bauelements 6 planparallel orientiert. Die optischen Fasern 16 sind im Ausführungsbeispiel entlang einer Kreislinie mit Radius R verlaufend unmittelbar aneinander angrenzend angeordnet, sodass ihre Faserenden an der ersten Stirnfläche 20 im Ausführungsbeispiel einen geschlossenen Kreis bilden.

Weiterhin ist in dem ersten Träger 14 eine Zentralfaser 26 geführt, die an der ersten Stirnfläche 20 auf der Rotationsachse D liegend endet. Fig. 5B zeigt nochmals das auch aus der Fig. 2 zu entnehmende Fasermuster der optischen Fasern 16 sowie der Zentralfaser 26 an der ersten Stirnfläche 20.

Diese Fasern 16, 26 werden zur Koppelfläche 22 hin, die in Fig. 5A dargestellt ist, in eine gemeinsame Anschlussebene überführt, sodass sie entlang einer Linie angeordnet sind. An dieser Koppelfläche 22 ist schließlich der erste Lichtwellenleiterchip 18 angekoppelt. Eine Aufsicht auf dessen Oberfläche 28, in die ein Wellenleitermuster 30 eingebracht ist, ist in Fig. 6 dargestellt.

Der Combiner 18 weist an seiner zur Koppelfläche 22 orientierten Stirnfläche eine Mehrzahl von Eingängen 34 auf, die jeweils mit den Fasern 16 sowie der Zentralfaser 26 fluchten. Dabei ist für die Zentralfaser 26 ein Durchschleifpfad 32 ausgebildet, welcher ohne Verzweigungen zu einer Ausgangs-Stirnseite führt, an der die Verbindungsfasern 12 angeschlossen sind. Im Ausführungsbeispiel werden sämtliche Eingänge 34, die mit den Fasern 16 fluchten, auf einen gemeinsamen Ausgang 36 zusammengeführt. Hierzu sind eine Vielzahl von sukzessive aufeinander folgende Y-Verteiler in das Wellenleitermuster 30 integriert. Durch die verzweigte Wellenleiterstruktur 30 ist der erste Lichtwellenleiterchip 18 allgemein als ein 1xN-Combiner ausgebildet, wobei N die Anzahl der optischen Fasern 16 ist. N ist dabei vorzugsweise ein Vielfaches von 2. Im Ausführungsbeispiel sind insgesamt 32 Fasern 16 an der ersten Stirnfläche 20 kreisförmig angeordnet. Allgemein sind mehrere zehn Fasern 16 im Träger 14 eingebettet.

An der Ausgangs-Stirnseite weist der Combiner 18 einen Anschlussträger 38 auf, in dem die Verbindungsfasern 12 angeordnet und befestigt sind und die mit dem gemeinsamen Ausgang 36 bzw. dem Ende des Durchschleifpfades 32 fluchten. Die Verbindungsfasern 12 liegen hierbei beispielsweise in V-Kerben ein, die in den Anschlussträger 38 eingebracht sind und werden in diesen Kerben durch eine Einbettmasse gehalten. Der Anschlussträger 38 ist insgesamt über ein geeignetes Bonding-Verfahren mit dem restlichen Substrat des planaren Combiners 18 verbunden.

Der Combiner 18 wiederum ist mit der Koppelfläche 22 des ersten Trägers 14 direkt ebenfalls mit einem geeigneten Bonding-Verfahren verbunden.

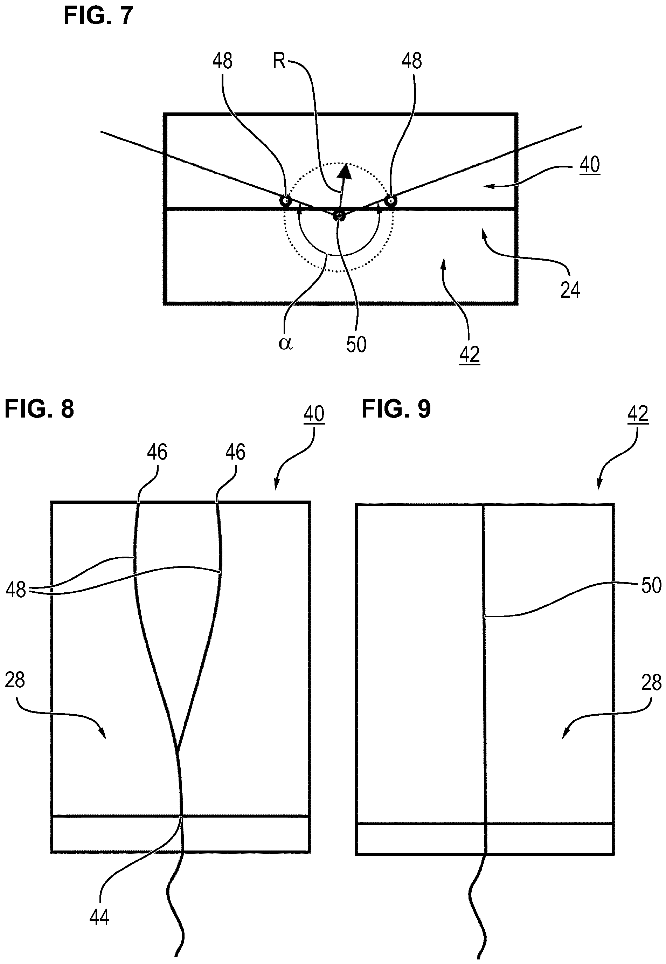

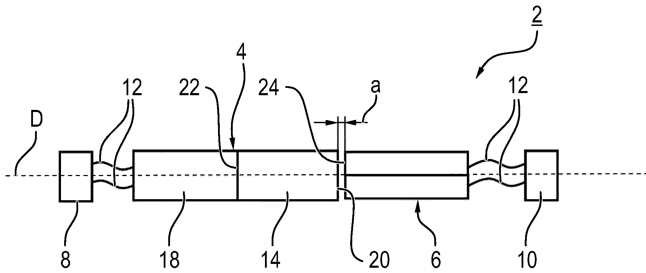

Bei der in Fig. 3 dargestellten ersten Ausführungsvariante ist das zweite Bauelement 6 gebildet durch einen zweiten, im Ausführungsbeispiel als Splitter ausgebildeten Lichtwellenleiterchip 40 sowie einen dritten planaren Lichtwellenleiterchip 42. Der Aufbau ergibt sich insbesondere auch aus den Figuren 7 bis 9.

Die beiden Lichtwellenleiterchips 40, 42 sind jeweils mit ihren Außenseiten 28 einander zugewandt, wobei an diesen Außenseiten 38 jeweils das Wellenleitermuster 30 ausgebildet ist. Wie aus Figur 2 zu entnehmen ist, sind die beiden Lichtwellenleiterchips 40, 42 an einem Spalt voneinander beabstandet. Das Spaltmaß beträgt dabei maximal das 1 bis 3-fache des Durchmessers der Fasern 16. Der zweite Lichtwellenleiterchip 40 ist - wie aus Fig. 8 zu entnehmen ist - hierbei als ein 1x2-Splitter ausgebildet, der sich von einem gemeinsamen Eingang 44 auf zwei Ausgängen 46 verzweigt. An seiner Ausgangsseite an der zweiten Stirnfläche 24 enden daher zwei Lichtwellenleiter 48. Der dritte Lichtwellenleiterchip 42 weist lediglich einen durchgehenden Lichtwellenleiter 48 ohne Verzweigungen auf. Am rückseitigen Ende umfassen beide Lichtwellenleiterchips 40, 42 wiederum einen Anschlussträger 38, über den die Verbindungsfasern 12 angeschlossen sind.

Die beiden Lichtwellenleiterchips 40, 42 bilden eine gemeinsame Baueinheit mit einer Trennebene, welche geringfügig beabstandet zur Rotationsachse D ausgebildet ist. Die Trennebene ist dabei insbesondere gebildet durch eine gedachte, im Spalt liegende Mittenebene zwischen den beiden Lichtwellenleiterchips 40,42.

Der dritte Lichtwellenleiterchip 42 weist als Lichtwellenleiter einen Zentralleiter 50 auf, welcher an der zweiten Stirnfläche 24 auf der Rotationsachse D liegend endet. Der Zentralleiter 50 bildet daher den zweiten Übertragungskanal, welcher koaxial zur Rotationsache D ausgebildet ist.

Die beiden Lichtwellenleiter 48 des zweiten Lichtwellenleiterchips (Splitter) 40 sind zumindest nahezu um den zweifachen Radius R voneinander beabstandet. Dies ergibt sich aus der speziellen planaren Technologie, wonach die Lichtwellenleiter 48, 50 in die Oberfläche 28 eingebracht werden. Zum einen muss die Anordnung der beiden Lichtwellenleiterchips 40, 42 derart gewählt werden, dass die Rotationsachse D innerhalb des dritten Lichtwellenleiterchips 42 verläuft, gleichzeitig müssen die Lichtwellenleiter 48 derart an der Oberfläche angeordnet sein, dass sie auf der Kreislinie mit Radius R um die Rotationsachse D liegen (vgl. Fig. 7).

Die Lichtwellenleiterchips 18, 40, 42 sind allgemein durch einen in etwa quaderförmigen Substratträger gebildet, der aus Glas oder einem geeigneten Kunststoff, beispielsweise bestehend aus PMMA, ausgebildet ist. In die Oberfläche 28 ist dabei jeweils durch ein geeignetes Verfahren das Wellenleitermuster 30, wie es sich jeweils zu den Fig. 6, 8, 9 ergibt, eingebracht. Hierbei wird grundsätzlich das Trägermaterial behandelt, sodass es in den gewünschten Bereichen das Lichtwellenleitermuster 30 ausbildet. Dies wird beispielsweise durch einen lonendiffusionsprozess in an sich bekannter Weise, erzeugt. Die einzelnen Wellenleiter des jeweiligen Wellenleitermusters 30 sind dabei insbesondere als Gradientenindex-Wellenleiter ausgebildet. Durch diese Maßnahme werden Laufzeitunterschiede in den einzelnen Wellenleiterabschnitten von den Eingängen 34 zu dem gemeinsamen Ausgang 36 möglichst vermieden, so dass auch bei hochfrequenten Datenübertragungen eine zuverlässige und sichere Datenübertragung gewährleistet ist.

Alternativ zu der beschriebenen Ausführungsvariante des zweiten optischen Bauelements 6 mit den beiden Wellenleiterchips 40,42 ist das optische Bauelement 6 ähnlich oder identisch zum ersten Bauelement 4 ausgebildet. Insbesondere weist es einen Träger mit darin eingebetteten Fasern auf, wobei an einer Koppelseite des zweiten Trägers 52 zumindest ein planarer Lichtwellenleiter angeschlossen ist. Auch hier ist wiederum vorgesehen, dass die auf einer Kreis(bogen)linie angeordneten Faserenden in eine gemeinsame Anschlussebene überführt werden.

Schließlich ist auch noch eine dritte Ausführungsvariante möglich, bei der das zweite optische Bauelement durch den zweiten Träger 52 gebildet ist, in dem optische Fasern gehalten und zur zweiten Stirnfläche 24 zur Ausbildung eines gewünschten Faserenden-Musters geführt sind. Im einfachsten Fall ist hierbei pro Übertragungskanal jeweils nur eine Faser in den zweiten Träger 52 integriert.

Zur Datenübertragung rotiert wahlweise oder in Kombination das erste oder das zweite optische Bauelement 4, 6. Das Datensignal über den einen koaxial zur Rotationsachse D gebildeten Kanal wird bei dieser Rotationsbewegung problemlos zwischen dem Zentralleiter 50 und der Zentralfaser 26 übertragen. Die beiden Bauelemente 4, 6 sind bezüglich der Rotationsachse D ausgerichtet, sodass also Zentralleiter 50 und Zentralfaser 26 miteinander fluchten.

Zur Übertragung eines weiteren Datensignals über einen weiteren Kanal wird das von der Sendeeinheit 10 eingespeiste Datensignal über den Splitter 40 auf die zwei Lichtwellenleiter 48 aufgeteilt. An den Ausgängen 46 liegen identische Datensignale an, lediglich mit verringerter Intensität. Durch die kreislinienförmige Anordnung der Fasern 16 ist gewährleistet, dass zu jeder Drehstellung und zu jedem Zeitpunkt das optische Signal von den Lichtwellenleitern 48 in die Fasern 16 übertragen werden. Voraussetzung hierfür ist, dass zu jeder Drehstellung gewährleistet ist, dass ein jeweiliger von den Lichtwellenleitern 48 ausgehender Lichtkegel zumindest zu einem großen Teil auf die Stirnseite einer optischen Faser 16 auftrifft. Aufgrund der speziellen Ausgestaltung des Splitters in Fig. 8 ist die gezeigte Anordnung der Fasern 16 in einem vollständig durchgehenden Kreis nicht zwingend erforderlich. Vielmehr wird alternativ eine Anordnung mit im Vergleich zum Vollkreis reduzierter Anzahl an optischen Fasern gewählt, beispielsweise eine Halbkreis-Anordnung, wobei die Fasern 16 dann einen Winkelbereich α (Figur 7) von beispielsweise 200° bis 230° überstreichen, um zu gewährleisten, dass zu jedem Zeitpunkt zumindest einer der Lichtwellenleiter 48 mit einer optischen Faser 16 fluchtet.

In der in der Fig. 4 dargestellten zweiten alternativen Ausführungsform ist das zweite optische Bauelement 6 als ein zweiter Träger 52 mit wiederum integrierten optischen Fasern als Lichtwellenleiter 48 bzw. Zentralleiter 50 ausgebildet. Der Aufbau des zweiten Trägers ist daher grundsätzlich - bis auf die unterschiedliche Anzahl der Fasern - identisch zu dem ersten Träger 14. Vorzugsweise ist dabei lediglich ein Lichtwellenleiter 48 ausgebildet, welcher um den Radius R von der Rotationsachse beabstandet ist. Eine zweite, den Zentralleiter 50 bildende Faser endet an der zweiten Stirnfläche 24 koaxial zur Rotationsachse D.

Die optische Schleifringanordnung 2 besteht - im Hinblick auf ihre optischen Komponenten und abgesehen von weiteren mechanischen Komponenten - aus den zu den Figuren 3 oder 4 beschriebenen optischen Komponenten. Weitere optische Komponenten, wie beispielsweise Linsen etc. sind vorzugsweise nicht vorgesehen. Alternativ ist eine oder sind beide Stirnflächen 20, 24 zusätzlich mit Linsen, beispielsweise in Form von Makro-, Mikro- oder GRIN-Linsen bestückt. Damit wird der Abstand zwischen den Stirnflächen 20, 24 beispielsweise bis auf einige Zentimeter vergrößert. Durch diese Maßnahme lässt sich z.B. die Störanfälligkeit gegen Staub verbessern, sofern die Dichtigkeit des mechanischen Schutzgehäuses Probleme bereiten sollte.

Alternativ zu den hier beschriebenen Ausführungsvarianten ist das zweite optische Bauelement 6 identisch zu dem ersten optischen Bauelement 4 ausgebildet. Insbesondere setzt es sich daher auch aus einem Träger 14 mit daran angeschlossenem Combiner 18 zusammen. In dem Träger 14 sind in diesem Fall eine Vielzahl von einzelnen optischen Fasern 16 integriert, die an der zweiten Stirnfläche 24 beispielsweise einen umlaufenden Kreis bilden, wie dies in Fig. 5B dargestellt ist, oder auch lediglich halbkreisförmig an der zweiten Stirnfläche 24 enden.

### Bezugszeichenliste

- 2: optische Schleifringanordnung
- 4: erstes optisches Bauelement
- 6: zweites optisches Bauelement
- 8: Auswerteeinheit
- 10: Sendeeinheit
- 12: Verbindungsfaser
- 14: erster Träger
- 16: optische Faser
- 18: Combiner
- 20: erste Stirnfläche
- 22: Koppelfläche
- 24: zweite Stirnfläche
- 26: Zentralfaser
- 28: Oberfläche
- 30: Wellenleitermuster
- 32: Durchschleifpfad
- 34: Eingang
- 36: gemeinsamer Ausgang
- 38: Anschlussträger
- 40: Splitter
- 42: dritter Lichtwellenleiterchip
- 44: gemeinsamer Eingang
- 46: Ausgang
- 48: Lichtwellenleiter
- 50: Zentralleiter
- 52: zweiter Träger

## Patentansprüche

1. Optische Schleifringanordnung (2) zur kontaktlosen Datenübertragung mit einem ersten optischen Bauelement (4) und mit einem zweiten optischen Bauelement (6), die zueinander um eine gemeinsame Rotationsachse (D) rotierbar angeordnet sind und hierzu mit einer ersten Stirnfläche (20) und einer zweiten Stirnfläche (24) einander gegenüberliegend angeordnet sind, wobei das erste optische Bauelement (4) eine Mehrzahl an optischen Fasern (16) aufweist, wobei an der ersten Stirnfläche (20) die optischen Fasern (16) entlang einer Kreisbogenlinie mit Radius (R) verlaufend angeordnet sind, wobei die Faserenden an der ersten Stirnfläche (20) entlang zumindest eines Kreisbogensegments der Kreisbogenlinie mit Radius (R) angeordnet sind,
- die Fasern (16) in einem ersten Träger (14) geführt sind, der sich von einer vorderen, ersten Stirnfläche (20) bis zu einer rückseitigen hinteren Koppelfläche (22) erstreckt; **dadurch gekennzeichnet, dass** an der Koppelfläche (22) ein erster planarer Lichtwellenleiterchip (18) angekoppelt ist,
- zumindest mehrere der optischen Fasern (16) in dem Träger (14) von der ersten Stirnfläche (20) zur Koppelfläche (22) in zumindest eine gemeinsame Anschlussebene mit entlang zumindest einer Linie angeordneten Faserenden überführt sind, so dass Eingänge (34) des planaren Lichtwellenleiterchips (18) mit den Faserenden optisch gekoppelt sind.

2. Optische Schleifringanordnung (2) nach Anspruch 1,
**dadurch gekennzeichnet,**
**dass** der Lichtwellenleiterchip (18) als ein Combiner ausgebildet ist mit einem ersten gemeinsamen Ausgang (36), wobei die Mehrzahl der Fasern (16) auf diesen ersten gemeinsamen Ausgang (36) zusammengeführt sind.

3. Optische Schleifringanordnung (2) nach Anspruch 1 oder 2,
**dadurch gekennzeichnet,**
**dass** im Träger (14) zusätzlich zumindest eine weitere Faser geführt ist, wahlweise eine Zentralfaser (26), die an der ersten Stirnseite auf der Rotationsachse (D) liegend endet, oder eine weitere Gruppe von optischen Fasern, die an der ersten Stirnseite (20) entlang einer weiteren Kreisbogenlinie angeordnet sind.

4. Optische Schleifringanordnung (2) nach Anspruch 3,
**dadurch gekennzeichnet,**
**dass** die Zentralfaser (26) bzw. die weitere Gruppe von optischen Fasern an die Koppelfläche (22) geführt und an den ersten Lichtwellenleiterchip (18) angekoppelt sind.

5. Optische Schleifringanordnung (2) nach einem der vorhergehenden Ansprüche,
**dadurch gekennzeichnet,**
**dass** der erste Lichtwellenleiterchip (18) einen der Zentralfaser (26) zugeordneten Durchschleifpfad (32) aufweist.

6. Optische Schleifringanordnung (2) nach einem der vorhergehenden Ansprüche,
**dadurch gekennzeichnet,**
**dass** die Faserenden der optischen Fasern (16) an der ersten Stirnfläche (20) aneinander angrenzen.

7. Optische Schleifringanordnung (2) nach einem der vorhergehenden Ansprüche,
**dadurch gekennzeichnet,**
**dass** die Faserenden der optischen Fasern (16) an der ersten Stirnfläche (20) halbkreisförmig aneinander angrenzend angeordnet sind.

8. Optische Schleifringanordnung nach einem der vorhergehenden Ansprüche,
**dadurch gekennzeichnet,**
**dass** in den planaren Lichtwellenleiterchip (18) ein Lichwellenleitermuster (30) mit Gradienten-Index-Wellenleitern integriert ist.

9. Optische Schleifringanordnung nach einem der vorhergehenden Ansprüche,
**dadurch gekennzeichnet,**
**dass** das zweite optische Bauelement (6) einen identischen Aufbau wie das erste optische Bauelement (4) aufweist.

10. Optische Schleifringanordnung (2) nach einem der vorhergehenden Ansprüche,
**dadurch gekennzeichnet,**
**dass** das zweite optische Bauelement (6) einen oder einige wenige Lichtwellenleiter (48) aufweist, die an der zweiten Stirnfläche (24) um den Radius (R) beabstandet von der Rotationsachse (D) und insbesondere vereinzelt und voneinander beabstandet enden.

11. Optische Schleifringanordnung (2) nach einem der vorhergehenden Ansprüche,
**dadurch gekennzeichnet,**
**dass** das zweite optische Bauelement (6) einen Zentralleiter (50) aufweist, der an der zweiten Stirnfläche (24) auf der Rotationsachse (D) liegend endet.

12. Optische Schleifringanordnung (2) nach einem der vorhergehenden Ansprüche,
**dadurch gekennzeichnet,**
**dass** das zweite optische Bauelement (6) als ein zweiter Träger (52) mit zumindest einer darin geführten Faser als Lichtwellenleiter (48) ausgebildet ist.

13. Optische Schleifringanordnung (2) nach einem der Ansprüche 1 bis 11,
**dadurch gekennzeichnet,**
**dass** das zweite optische Bauelement (6) zumindest einen zweiten planaren Lichtwellenleiterchip (40) umfasst, der den zumindest einen Lichtwellenleiter (48) aufweist.

14. Optische Schleifringanordnung (2) nach Anspruch 13,
**dadurch gekennzeichnet,**
**dass** der zweite Lichtwellenleiterchip (40) als ein 1x2 Splitter ausgebildet ist und einen gemeinsamen Eingang (44) aufweist, der sich auf zwei an der zweiten Stirnfläche (24) endende Lichtwellenleiter (48) aufteilt.

15. Optische Schleifringanordnung (2) nach Anspruch 13 oder 14,
**dadurch gekennzeichnet,**
**dass** das zweite optische Bauelement (6) einen dritten planaren Lichtwellenleiterchip (42) aufweist und der zweite sowie dritte Lichtwellenleiterchip (42) jeweils eine Oberfläche (28) mit einem integrierten Lichtwellenleitermuster (30) aufweisen, wobei die beiden Lichtwellenleiterchips (40, 42) mit diesen Oberflächen (28) einander zugewandt das zweite optische Bauelement (6) bilden.

## Claims

1. Optical slip ring arrangement (2) for non-contact data transmission via a first optical component (4) and via a second optical component (6) which are rotatable with respect to one another about a common axis of rotation (D), and for this purpose, are arranged opposite one another via a first end face (20) and a second end face (24), wherein the first optical component (4) has a plurality of optical fibers (16), wherein on the first end face (20), the optical fibers (16) are arranged running along a circular arc having a radius (R), wherein the fiber ends are arranged at the first end face (20) along at least one arc segment of the circular arc having a radius (R),
- the fibers (16) are routed in a first carrier (14) which extends from a front, first end face (20) to a rear coupling face (22) on the rear side; **characterized in that** a first planar optical waveguide chip (18) is coupled to the coupling face (22),
- at least a plurality of the optical fibers (16) in the carrier (14) are transferred from the first end face (20) to the coupling face (22) in at least one common connection plane with fiber ends arranged along at least one line, so that inputs (34) of the planar optical waveguide chip (18) are optically coupled to the fiber ends.

2. Optical slip ring arrangement (2) according to Claim 1,
**characterized in that**
the optical waveguide chip (18) is designed as a combiner having a first common output (36), wherein the plurality of the fibers (16) are brought together to this first common output (36).

3. Optical slip ring arrangement (2) according to Claim 1 or 2,
**characterized in that**
in addition, at least one additional fiber is routed in the carrier (14), optionally, a central fiber (26), which terminates at the first front side lying on the axis of rotation (D), or an additional group of optical fibers, which are arranged on the first front side (20) along an additional circular arc.

4. Optical slip ring arrangement (2) according to Claim 3,
**characterized in that**
the central fiber (26) or the additional group of optical fibers are routed to the coupling face (22) and coupled to the first optical waveguide chip (18).

5. Optical slip ring arrangement (2) according to one of the preceding claims,
**characterized in that**
the first optical waveguide chip (18) has a loop-through path (32) which is associated with the central fiber (26).

6. Optical slip ring arrangement (2) according to one of the preceding claims,
**characterized in that**
the fiber ends of the optical fibers (16) are adjacent to one another at the first end face (20).

7. Optical slip ring arrangement (2) according to one of the preceding claims,
**characterized in that**
the fiber ends of the optical fibers (16) are arranged on the first end face (20) adjacent to one other in a semicircular manner.

8. Optical slip ring arrangement according to one of the preceding claims,
**characterized in that**
an optical waveguide pattern (30) with gradient-index waveguides is integrated into the planar optical waveguide chip (18).

9. Optical slip ring arrangement according to one of the preceding claims,
**characterized in that**
the second optical component (6) has a structure which is identical to that of the first optical component (4) .

10. Optical slip ring arrangement (2) according to one of the preceding claims,
**characterized in that**
the second optical component (6) has one or a few optical waveguides (48) which are spaced apart from the axis of rotation (D) by the radius (R) at the second end face (24), and in particular terminate individually and spaced apart from one another.

11. Optical slip ring arrangement (2) according to one of the preceding claims,
**characterized in that**
the second optical component (6) has a central conductor (50) which terminates at the second end face (24) lying on the axis of rotation (D).

12. Optical slip ring arrangement (2) according to one of the preceding claims,
**characterized in that**
the second optical component (6) is designed as a second carrier (52) having at least one fiber routed therein as an optical waveguide (48).

13. Optical slip ring arrangement (2) according to one of Claims 1 to 11,
**characterized in that**
the second optical component (6) includes at least a second planar optical waveguide chip (40) which has the at least one optical waveguide (48).

14. Optical slip ring arrangement (2) according to Claim 13,
**characterized in that**
the second optical waveguide chip (40) is designed as a 1x2 splitter and has a common input (44) which splits into two optical waveguides (48) terminating at the second end face (24).

15. Optical slip ring arrangement (2) according to Claim 13 or 14,
**characterized in that**
the second optical component (6) has a third planar optical waveguide chip (42), and the second and third optical waveguide chips (42) each have a surface (28) having an integrated optical waveguide pattern (30), wherein the two optical waveguide chips (40, 42) form the second optical component (6) with these surfaces (28) facing one another.

## Revendications

1. Arrangement de bague collectrice optique (2) servant à la transmission de données sans contact, comprenant un premier composant optique (4) et comprenant un deuxième composant optique (6) qui sont disposés à rotation l'un par rapport à l'autre autour d'un axe de rotation (D) commun et, à cet effet, sont disposés en vis-à-vis l'un de l'autre avec une première surface frontale (20) et une deuxième surface frontale (24), le premier composant optique (4) possédant une pluralité de fibres optiques (16), les fibres optiques (16) au niveau de la première surface frontale (20) étant disposées en s'étendant le long d'une ligne en arc de cercle de rayon (R), les extrémités de fibre au niveau de la première surface frontale (20) étant disposées le long d'au moins un segment d'arc de cercle de la ligne en arc de cercle de rayon (R),
- les fibres (16) étant guidées dans un premier élément porteur (14) qui s'étend depuis une première surface frontale (20) à l'avant jusqu'à une surface de couplage (22) arrière du côté postérieur ;
**caractérisé en ce que**
une première puce à guide d'ondes optiques (18) plane est accouplée à la surface de couplage (22),
- au moins plusieurs des fibres optiques (16) dans l'élément porteur (14) transitent de la première surface frontale (20) à la surface de couplage (22) dans au moins un plan de raccordement commun avec des extrémités de fibre disposées le long d'au moins une ligne, de sorte que les entrées (34) de la puce à guide d'ondes optiques (18) plane sont couplées optiquement aux extrémités de fibre.

2. Arrangement de bague collectrice optique (2) selon la revendication 1, **caractérisé en ce que** la puce à guide d'ondes optiques (18) est réalisée sous la forme d'un combineur pourvu d'une première sortie commune (36), la pluralité de fibres (16) étant réunie sur cette première sortie commune (36).

3. Arrangement de bague collectrice optique (2) selon la revendication 1 ou 2, **caractérisé en ce qu'**au moins une fibre supplémentaire passe en plus dans l'élément porteur (14), au choix une fibre centrale (26) qui se termine au niveau du premier côté frontal en étant située sur l'axe de rotation (D), ou un groupe supplémentaire de fibres optiques qui sont disposées au niveau du premier côté frontal (20) le long d'une ligne en arc de cercle supplémentaire.

4. Arrangement de bague collectrice optique (2) selon la revendication 3, **caractérisé en ce que** la fibre centrale (26) ou le groupe supplémentaire de fibres optiques sont amenés au niveau de la surface de couplage (22) et accouplées à la première puce à guide d'ondes optiques (18).

5. Arrangement de bague collectrice optique (2) selon l'une des revendications précédentes, **caractérisé en ce que** la première puce à guide d'ondes optiques (18) possède un chemin de bouclage (32) associé à la fibre centrale (26).

6. Arrangement de bague collectrice optique (2) selon l'une des revendications précédentes, **caractérisé en ce que** les extrémités de fibre des fibres optiques (16) sont adjacentes les unes aux autres au niveau de la première surface frontale (20).

7. Arrangement de bague collectrice optique (2) selon l'une des revendications précédentes, **caractérisé en ce que** les extrémités de fibre des fibres optiques (16) sont disposées adjacentes les unes aux autres en forme de demi-cercle au niveau de la première surface frontale (20).

8. Arrangement de bague collectrice optique selon l'une des revendications précédentes, **caractérisé en ce qu'**un modèle de guide d'ondes optiques (30) avec des guides d'ondes à gradient d'indice est intégré dans la puce à guide d'ondes optiques (18) plane.

9. Arrangement de bague collectrice optique selon l'une des revendications précédentes, **caractérisé en ce que** le deuxième composant optique (6) possède une structure identique à celle du premier composant optique (4).

10. Arrangement de bague collectrice optique (2) selon l'une des revendications précédentes, **caractérisé en ce que** le deuxième composant optique (6) possède un ou quelques guides d'ondes optiques (48) qui se terminent au niveau de la deuxième surface frontale (24) en étant espacés de l'axe de rotation (D) du rayon (R) et notamment isolés et espacés les uns des autres.

11. Arrangement de bague collectrice optique (2) selon l'une des revendications précédentes, **caractérisé en ce que** le deuxième composant optique (6) possède un conducteur central (50) qui se termine au niveau de la deuxième surface frontale (24) en étant situé sur l'axe de rotation (D).

12. Arrangement de bague collectrice optique (2) selon l'une des revendications précédentes, **caractérisé en ce que** le deuxième composant optique (6) est réalisé sous la forme d'un deuxième élément porteur (52) comprenant au moins une fibre passant dans celui-ci sous la forme d'un guide d'ondes optiques (48).

13. Arrangement de bague collectrice optique (2) selon l'une des revendications 1 à 11, **caractérisé en ce que** le deuxième composant optique (6) comporte au moins une deuxième puce à guide d'ondes optiques (40) plane, laquelle possède l'au moins un guide d'ondes optiques (48).

14. Arrangement de bague collectrice optique (2) selon la revendication 13, **caractérisé en ce que** la deuxième puce à guide d'ondes optiques (40) est réalisée sous la forme d'un séparateur 1x2 et possède une entrée commune (44) qui se répartit sur deux guides d'ondes optiques (48) se terminant au niveau de la deuxième surface frontale (24).

15. Arrangement de bague collectrice optique (2) selon la revendication 13 ou 14, **caractérisé en ce que** le deuxième composant optique (6) possède une troisième puce à guide d'ondes optiques (42) plane et la deuxième ainsi que la troisième puce à guide d'ondes optiques (42) possèdent respectivement une surface (28) pourvue d'un modèle de guide d'ondes optiques (30) intégré, les deux puces à guide d'ondes optiques (40, 42), avec ces surfaces (28) se faisant mutuellement face, formant le deuxième composant optique (6).
